# EUROPEAN PATENT SPECIFICATION

(11) **EP 1 452 429 B1**
(45) Date of publication and mention of the grant of the patent: **17.05.2006**
(21) Application number: 04001865.7
(22) Date of filing: 19.02.2004
(51) Int. Cl.: B62D 65/00

(54) **Coupling assembly for coupling an arch element and a skid element in an automatic system for processing motor vehicle bodyworks**
Kupplungsvorrichtung für die Verbindung eines Trägerrahmens mit einer Skidvorrichtung in automatischen Kfz-Karosseriebehandlungsanlagen
Ensemble de couplage d'un cadre-porteur et une plateforme mobile dans une ligne de production automatique de carosseries de véhicule

(30) Priority: 25.02.2003 IT MI20030337
(43) Date of publication of application: 01.09.2004
(73) Proprietor: GEICO S.p.A., I-20092 Cinisello Balsamo, Milano (IT)
(72) Inventor: Molteni, Diego, 20092 Cinisello Balsamo (Milano) (IT)
(74) Representative: Cicogna, Franco

(56) References cited:
- FR-A- 2 595 336
- IT-B- 1 244 410
- US-A- 4 831 962
- US-B1- 6 374 993

## Description

### BACKGROUND OF THE INVENTION

The present invention relates to a coupling assembly for coupling an arch element and a skid element in an automatic system for processing motor vehicle bodyworks.

As is known, in automative systems fort processing motor vehicle bodyworks in general, are conventionally used the so-called sliding blocks or "skids", to which is connected a motor vehicle bodywork to be processed through the system.

Said skid is conveyed to the different processing stations of the system, and is so designed as to be adapted to be taken by arch elements for introducing said skid elements and the related motor vehicle bodywork supported thereby, into processing basins.

During this operating step, it is necessary to make the skid element rigid with the arch element, to properly introduce the motor vehicle bodywork into said processing basin, and, in this operation, it is necessary to overcome the floating pushing force exerted on the motor vehicle bodywork as it is introduced into said basin, which is obtained by slanting or inclining according to opposite angles the skid element, in said basin introduction operation.

In conventional motor vehicle bodywork processing systems, further small arch element are provided, which are coupled to driving means performing a latching operation between the pin elements projecting from the skid and the mentioned fork elements.

The latter are provided on the arch assemblies provided for introducing the skid elements into said basins and withdrawing the skid elements from said basins or tanks.

While the above mentioned approaches have been found as satisfactory from a lot of standpoints, they would be susceptible to further improvements, specifically with respect to a simplification of their construction. The document FR-A-2595336 discloses a coupling assembly substantially according to the preamble of claim 1.

### SUMMARY OF THE INVENTION

Accordingly, the aim of the present invention is to provide such a coupling assembly for coupling an arch element and a skid element in an automatic system for processing motor vehicle bodyworks, which allows to perform a firm and safe coupling, while reducing to a minimum the number of the component members required to achieve this end.

Within the scope of the above mentioned aim, a main object of the present invention is to provide such a coupling assembly, in which the coupling can be made without using movable elements which would be susceptible to jams.

Yet another object of the present invention is to provide such a coupling assembly which, owing to its specifically designed construction, is very reliable and safe in operation.

Yet another object of the present invention is to provide such a coupling assembly which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by a coupling assembly for coupling an arch element and a skid element according to claim 1.

### BRIEF DESCRIPTION OF THE DRAWINGS

Further characteristics and advantages of the present invention will become more apparent hereinafter from the following detailed disclosure, of a preferred, though not exclusive, embodiment, of a coupling assembly for coupling an arch element and a skid element in an automatic system for processing motor vehicle bodyworks, which is illustrated, by way of an indicative, but not limitative example, in the accompanying drawings, where:

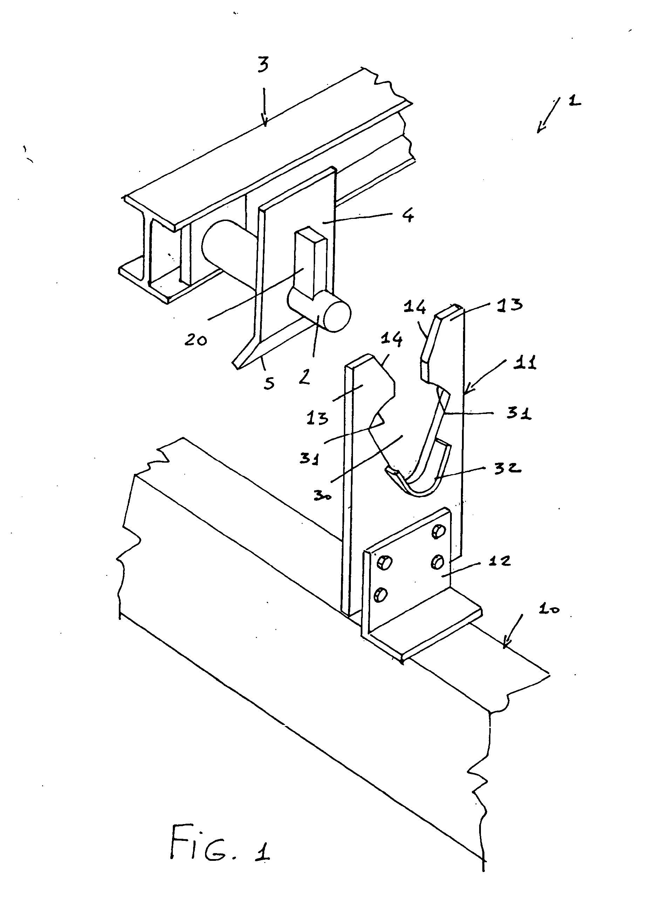

Figure 1 is a schematic exploded view illustrating the pin provided on the skid element and with the fork being arranged on the arch element or assembly;

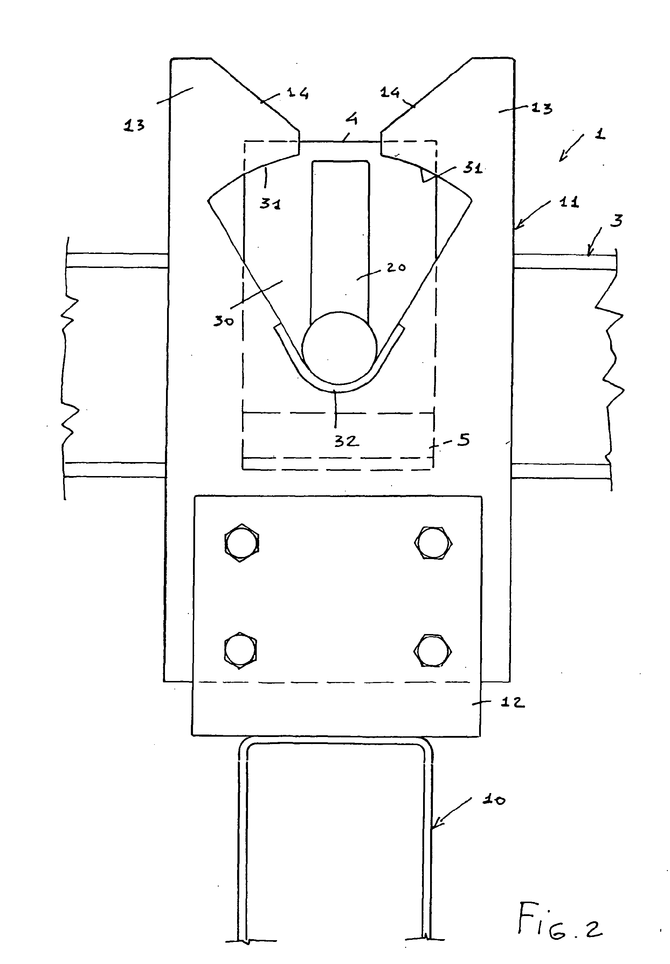

Figure 2 is a front view illustrating the coupling between said pin and fork with the skid arranged in a horizontal position;

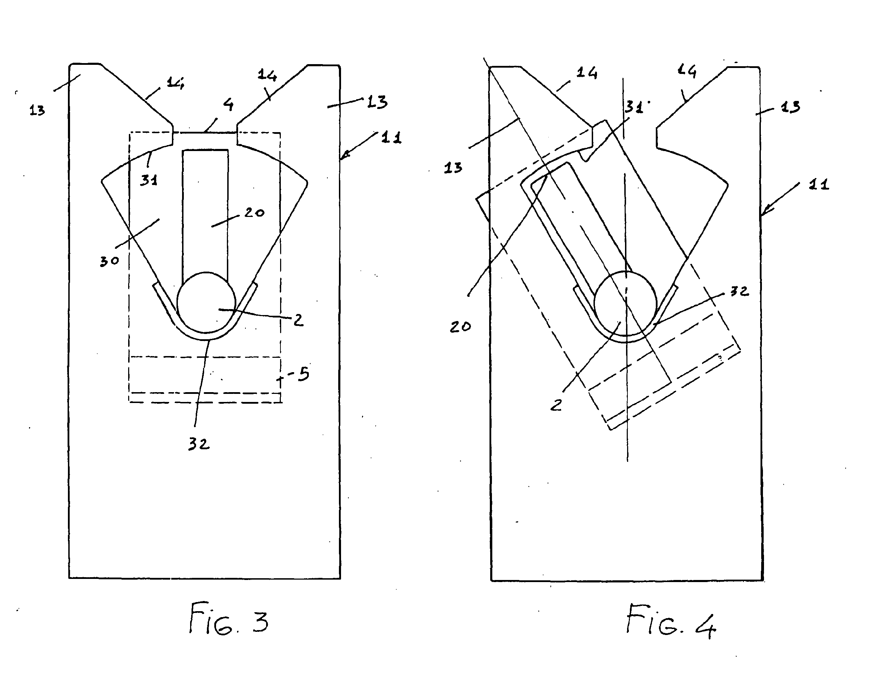

Figure 3 is a schematic view illustrating the pin engaged in the fork with the skid in a horizontal position;

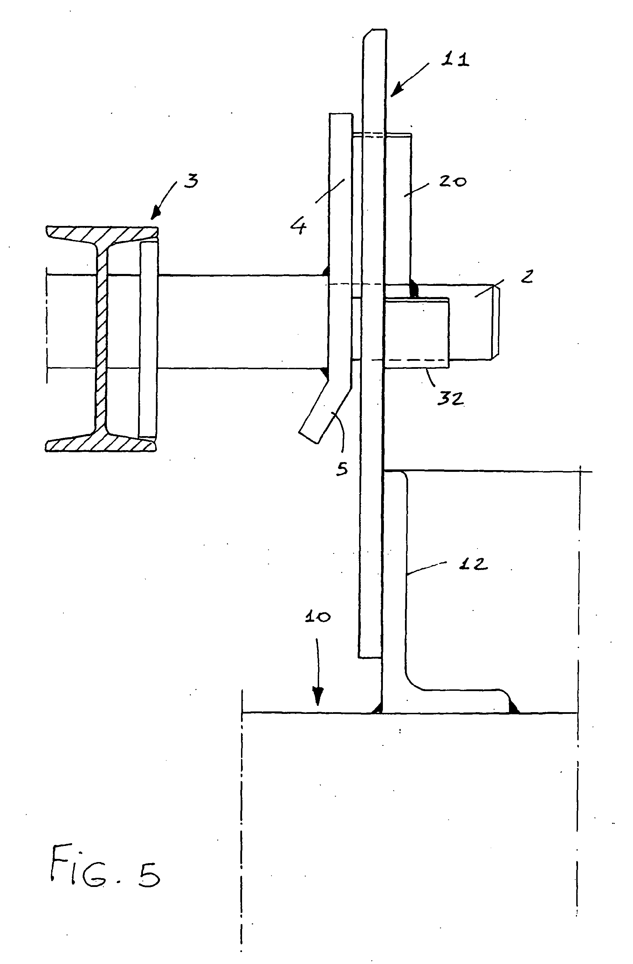

Figure 4 illustrates the pin engaged in the fork with the skid in an inclined or slanted position;
Figure 5 is a side view illustrating the coupling between said pin and fork elements; and

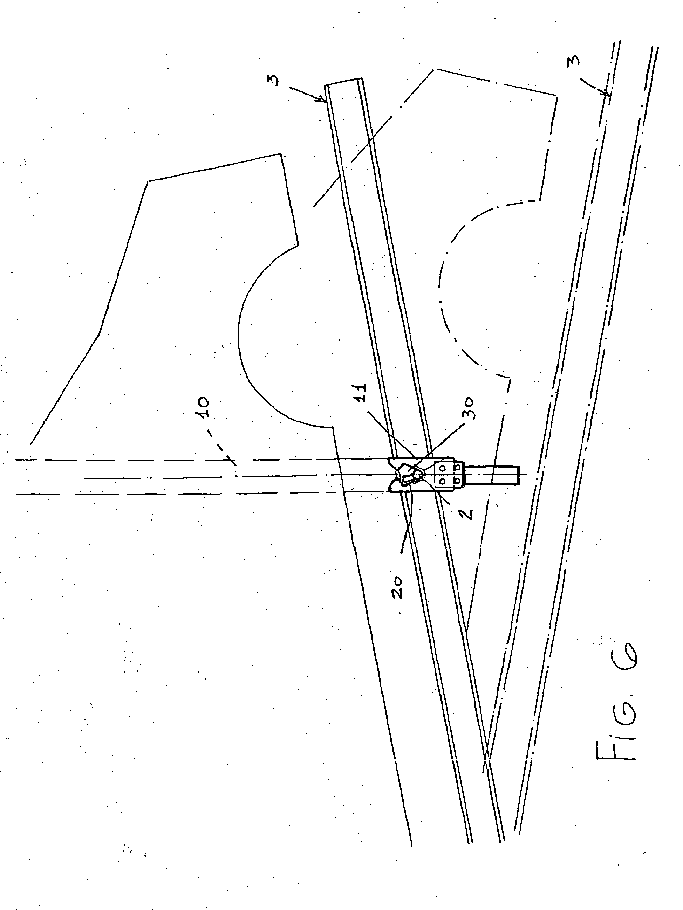

Figure 6 schematically show the operating step of slanting or inclining the skid element with respect to the arch element for introducing a motor vehicle bodywork into a processing basin or tank.

### DESCRIPTION OF THE PREFERRED EMBODIMENTS

With reference to the number references of the above mentioned figures, the coupling assembly for coupling an arch element and a skid element in an automatic system for processing motor vehicle bodyworks, which has been generally indicated by the reference number 1, comprises pin elements 2 and, more specifically two front pin elements and two rear pin elements, laterally projecting from a sliding block or skid, generally indicated by the reference number 3.

As shown, on the pin element 2 a protecting plate 4 having at the bottom thereof a lead-in inclined leg 5 is arranged.

Correspondingly, on the arch elements or assemblies, generally indicated by the reference number 10, is provided a fork element 11 which is coupled to said arch element by a bracket member 12.

The fork element, in turn, is provided with top legs 13, with a lead-in beveled portion 14, to introduce the pin elements into said fork.

The main feature of the invention is that are provided locking elements, rigid with the skid 3 and which, comprise a radially extending portion 20 projecting from the pin 2 and rigid with the protecting plate 4.

Correspondingly, the fork element 11 is provided with a V enlarged portion, generally indicated by the reference number 30, which, in its top part, under the legs 13, comprises abutment elements 31 having a circumferential length configuration.

At the bottom portion of the enlarged part 30, an enlargement element 32 operating as a pin bearing member is arranged.

The distance defined by the beveled portions 14 of the legs or arms 13 is so designed as to allow the pin and related radial portion 20, which is engaged in the enlarged part 30, to be easily engaged.

Thus, by slanting or inclining the skid 3, by raising in an offset manner the arch assemblies, the pin 2 will practically rotate and the radially extending portion 20 will engage the abutment elements 31.

Thus, the pin is automatically locked in the fork and, accordingly, during the step for introducing the bodywork inside the processing basin, the floating force is prevented from accidentally disengaging the arch and skid elements.

The above disclosed approach allow to provide a firm locking, without the provision of any movable elements, but merely exploiting the conventional slanting movement of the skid with respect to a horizontal plane.

Thus, the skid will be locked with respect to the arch element due to the engagement between the radially extending portion and the abutment element arranged at the enlarged portion of the fork.

From the above disclosure it should be apparent that the invention fully achieves the intended aim and objects.

In particular, the invention provides a coupling assembly which is very simple construction wise and allows to provide a quick and automatic locking.

The invention, as disclosed, is susceptible to several modifications and variations, all of which will come within the scope of the invention as defined by the appended claims.

Moreover, all the constructional details can be replaced by other technically equivalent elements.

In practicing the invention, the used materials, as well as the contingent size and shapes, can be any, depending on requirements.

## Claims

1. A coupling assembly (1) for coupling an arch element and a skid element in an automatic system for processing motor vehicle bodyworks, comprising engaging pins (2) projecting from a frame of a skid element (3) and fork elements (11) correspondingly provided on bodyworks taking arch elements (10) such that said engaging pins (2) of said skid element (2) are pivotally supported by said fork elements (11) of said arch elements (10), whereby said coupling assembly further comprises locking elements (20) associated with said skid element (3) and engageable, as said skid element (3) is brought to a slanted position, with respect to a horizontal plane, with abutment elements (31) defined by said fork elements (11) during the relative rotation of said pins (2) with respect to said fork elements (11) as said skid element (3) assumes the slanted position, whereby said locking elements (20) are rigidly coupled to said pins (2) and comprise a radially projecting portion (20) extending from said pin (2), **characterized in that** said coupling assembly comprises, rigid with said pin (2), a projecting plate (4) rigidly coupled to said radially extending portion (20), that said projecting plate (4) is provided with a bottom inclined lead-in portion (5), and that said fork elements (11) are provided with two top legs (13) with a lead-in beveled portion (14) to introduce said pins into said fork elements (11).

2. A coupling assembly, according to Claim 1, **characterized in that** said fork elements (11) have a V-shape enlarged portion (30) delimited at the top thereof by said abutment elements (31), and at a bottom thereof by a curved element (32) operating as a cradle for swingably supporting said pin (2).

3. A coupling assembly, according to Claims 1 and 2, **characterized in that** said lead-in beveled portion (14) of said two top legs (13) of said fork elements (11) converges toward said enlarged portion (30) of said fork elements.

## Patentansprüche

1. Kupplungsvorrichtung (1) zur Verbindung eines Trägerrahmens mit einer Skidvorrichtung in automatischen Kfz-Karosseriebehandlungsanlagen, umfassend Eingriffsstifte (2), die von einem Rahmen einer Skidvorrichtung (3) vorspringen, und Gabelelemente (11), die auf entsprechende Weise auf karosserieaufnehmenden Tragrahmen (10) so vorgesehen sind, daß die Eingriffsstifte (2) der Skidvorrichtung (3) auf drehbare Weise von den Gabelelementen (11) der Tragrahmen (10) getragen werden, wobei diese Kupplungsvorrichtung außerdem Verriegelungselemente (20) trägt, die mit der Skidvorrichtung (3) verbunden sind und einrastbar sind, wenn die Skidvorrichtung (3) relativ zu einer horizontalen Ebene in eine geneigte Stellung gebracht wird, mit Widerlagern (31), die von den Gabelelementen (11) während der relativen Drehung der Stifte (2) relativ zu den Gabelelementen (11) definiert werden, wenn die Skidvorrichtung (3) die geneigte Stellung einnimmt, wobei die Verriegelungselemente (20) starr mit den Stiften (2) verbunden sind und einen radial vorspringenden Abschnitt (20) umfassen, der vom Stift (2) verläuft, **dadurch gekennzeichnet, daß** die Kupplungsvorrichtung, starr zu diesem Stift (2), eine vorspringende Platte (4) umfaßt, die mit dem radial vorspringenden Abschnitt (20) starr verbunden ist, daß die vorspringende Platte (4) am Boden mit einem schrägen Einführungsabschnitt (5) versehen ist, und daß die Gabelelemente (11) mit zwei oberen Beinen (13) versehen sind, mit einem abgeschrägten Einführungsabschnitt (14), um die Stifte in die Gabelelemente (11) einzuführen.

2. Kupplungsvorrichtung nach Anspruch 1, **dadurch gekennzeichnet, daß** die Gabelelemente (11) einen V-förmig erweiterten Abschnitt (30) aufweisen, der an seiner Oberseite durch die Widerlager (31) begrenzt wird, und an seinem Boden durch ein gekrümmtes Element (32) das als ein Lagerstuhl wirkt, um den Stift (2) auf drehbare Weise zu tragen.

3. Kupplungsvorrichtung nach Anspruch 1 und 2, **dadurch gekennzeichnet, daß** der schräge Einführungsabschnitt (14) der zwei Beine (13) der Gabelelemente (11) zum erweiterten Abschnitt (30) dieser Gabelelemente hin konvergiert.

## Revendications

1. Ensemble d'accouplement (1) pour l'accouplement d'un élément en arceau et d'un élément de patin dans un système automatique pour traiter les carrosseries des véhicules automobiles, comprenant des axes d'accouplement (2) saillants depuis une structure d'un élément de patin (3) et des éléments de fourche (11) disposés de façon correspondante sur les carrosseries supportant lesdits éléments en arceau (10) de telle sorte que lesdits axes d'accouplement (2) dudit élément de patin (3) sont supportés de façon pivotante par lesdits éléments de fourche (11) desdits éléments en arceau (10), moyennant quoi ledit ensemble d'accouplement comprend également des éléments de verrouillage (20) associés au dit élément de patin (3) et pouvant être accouplés, quand ledit élément de patin (3) est amené dans une position oblique par rapport à un plan horizontal, avec des éléments de butée (31) définis par lesdits éléments de fourche (11) au cours de la rotation relative desdits axes (2) par rapport auxdits éléments de fourche (11) quand ledit élément de patin (3) prend la position oblique, moyennant quoi lesdits éléments de verrouillage (20) sont accouplés de façon rigide auxdits axes (2) et comprennent une partie saillante radialement (20) s'étendant depuis ledit axe (2), **caractérisé en ce que** ledit ensemble d'accouplement comprend, rigide avec ledit axe (2), une plaque saillante (4) rigidement accouplée à ladite partie s'étendant radialement (20), **en ce que** ladite plaque saillante (4) comprend une partie d'entrée inférieure inclinée (5), et **en ce que** lesdits éléments de fourche (11) comprennent deux pieds supérieurs (13) avec une partie d'entrée biseautée (14) pour introduire lesdits axes dans lesdits éléments de fourche (11).

2. Ensemble d'accouplement selon la revendication 1, **caractérisé en ce que** lesdits éléments de fourche (11) comprennent une partie agrandie en V (30) délimitée à son sommet par lesdits éléments de butée (31), et à sa partie inférieure par un élément incurvée (32) servant de berceau pour supporter de façon oscillante ledit axe (2).

3. Ensemble d'accouplement selon la revendication 1 et la revendication 2, **caractérisé en ce que** ladite partie d'entrée biseautée (14) desdits deux pieds supérieurs (13) desdits éléments de fourche (11) converge vers ladite partie agrandie (30) desdits éléments de fourche.
